# NEUE EUROPÄISCHE PATENTSCHRIFT

(11) **EP 2 088 166 B2**
(45) Veröffentlichungstag und Bekanntmachung des Hinweises auf die Entscheidung über den Einspruch: **25.09.2019**
(45) Hinweis auf die Patenterteilung: 29.06.2011
(21) Anmeldenummer: 08171463.6
(22) Anmeldetag: 12.12.2008
(51) Int. Cl.: C08G 18/50, C08G 65/333, C08J 9/00

(54) **Kompatibilisierungsmittel zur Verbesserung der Lagerstabilität von Polyolmischungen**
New compatibility resources to improve the storage stability of polyol mixtures
Agent de compatibilité d'un nouveau type destiné à l'amélioration de la stabilité au stockage de mélanges de polyol

(30) Priorität: 06.02.2008 DE 102008000243
(43) Veröffentlichungstag der Anmeldung: 12.08.2009
(73) Patentinhaber: Evonik Degussa GmbH, 45128 Essen (DE)
(72) Erfinder: De Gans, Berend-Jan, Dr., 45478, Mülheim an der Ruhr (DE); Glos, Martin, Dr., 46325, Borken (DE); Ferenz, Michael, Dr., 45147, Essen (DE)
(74) Vertreter: Evonik Patent Association

(56) Entgegenhaltungen:
- EP-A- 0 060 430
- EP-A- 0 061 058
- EP-A- 0 268 906
- EP-A- 0 388 781
- EP-A- 1 897 904
- EP-A1- 1 106 634
- EP-A2- 1 470 086
- EP-A2- 1 837 355
- WO-A1-03/066700
- WO-A2-2006/094227
- DE-A1- 19 705 993
- US-A1- 2004 198 901
- US-A1- 2007 238 800
- US-B2- 6 770 370
- Produktdatenblatt Lupranat T 80 A

## Beschreibung

Die Erfindung betrifft Kompatibilisierungsmittel für Polyolzusammensetzungen aus nicht miteinander mischbaren Polyolen, gemäß den Maßgaben von Anspruch 1.

Als homogen sollen Mischungen aus zwei oder mehreren Komponenten, hier Polyolzusammensetzungen verstanden werden, die keine sichtbare Phasentrennung aufweisen. Homogene Mischungen dieser Art können in verschiedenen Formen auftreten wie beispielsweise als (echte) Lösungen, Emulsionen, Mikroemulsionen, usw..
Substanzen, die die Bildung solcher homogener Mischungen begünstigen, unabhängig davon, ob im wässrigen oder nichtwässrigen Milieu oder auch zusammen mit Feststoffen, werden in dieser Anmeldung als Kompatibilisierungsmittel bezeichnet.

Polyurethanschäume werden in vielfältigen Anwendungen, zum Beispiel zur thermischen Isolierung, zur Energieabsorption und zur Schallabsorption genutzt. Von daher ist es notwendig, Polyurethane in unterschiedlichen genau eingestellten Spezifikationen/Parametern herzustellen. Zu diesen wichtigen Parametern gehören beispielsweise mechanische Eigenschaften, die Dichte und die Formzeit.

Bei der technischen Herstellung von Polyurethanschäumen werden Polyole und insbesondere Polyolmischungen als reaktive Komponente für die Umsetzung mit Polyisocyanaten verwendet. Die Eigenschaften des gebildeten Schaums hängen in besonderem Maße von der Struktur und der chemischen Zusammensetzung der verwendeten Polyolmischungen ab.

In der PU-Industrie (Schaum-Bereich) werden unterschiedlichste Typen von Polyolen verwendet. So gibt es die z.B. die Einteilung nach Polyether-Polyolen und Polyester-Polyolen, je nachdem wie die chemische Struktur der Verbindungen aussieht.

Weiterhin werden bei den Polyolen Unterscheidungen nach dem Syntheseweg dieser wichtigen Verbindungsklasse gemacht. So können die Polyole auf nachwachsenden Rohstoffen basieren und somit dem modernen Begriff der Erneuerbarkeit genügen.
Solche aus nachwachsenden Rohstoffen hergestellten Polyole warden daher als NOPs (natural oil based polyols) bezeichnet. Dazu gehören Vertreter der z.B. pflanzlichen Öle oder Extrakte von pflanzlichen Rohstoffen, bei deren Herstellung keine oder nur eine geringe Anzahl an chemischen Veränderungen/Syntheseschritten benötigt werden.

Die EP-1537159 beschreibt die Herstellung von Polyolen zur Herstellung von Polyurethanschäumen unter Verwendung von Rizinusöl-basierenden Alkoxylaten.

Die EP-1712576 beschreibt die Verwendung von Alkoxylaten pflanzlicher Öle als Polyole bei der Herstellung von Polyurethanen.

Die WO-00/00529 beschreibt die Herstellung von PU-Schäumen unter Verwendung von Rizinusöl als Polyol.

Es werden hydroxylgruppenhaltige Pflanzenöle und modifizierte hydroxylgruppenhaltige Pflanzenöle eingesetzt mit OH-Zahlen im Bereich 100 bis 300. Besonders geeignet ist Rizinusöl oder modifiziertes Rizinusöl mit OH-Zahlen von 150 bis 160.

In EP-1765901 werden Polyole für die Herstellung von PU-Hartschaum beschrieben, die auf Basis von CNSL hergestellt werden durch Epoxidierung der Doppelbindungen in der Alkylenseitenkette und anschließende Ringöffnung um die OH-Zahl des Polyols zu erhöhen.

Aktuelle Trends sind z.B. die Verwendung von naturbasierenden Polyolen (NOPs), die mit konventionellen erdölbasierenden Polyolen gemischt werden oder genereller die Verwendung von mindestens zwei Polyolen, die unterschiedliche Polaritäten aufweisen z.B. durch unterschiedliche Gehalte an Polyethylenoxid. In beiden Fällen tritt das Problem auf, dass die zu verschäumenden (verarbeitenden) Polyole nicht mehr löslich in einander sind und die Polyolmischung eine Emulsion oder Dispersion darstellt, die oftmals nur begrenzt lagerstabil ist; solche Mischungen werden im Rahmen der Anmeldung als nicht miteinander kompatibel bezeichnet.

In US-20070238800 wird so eine lagerstabile, gegenüber Isocyanaten reaktive Zusammensetzung beschrieben, die mindestens 10% eines Pflanzenöl-basierenden Polyols enthält, wobei zur Verbesserung der Lagerstabilität Nonylphenol-Ethoxylate mit mindestens 25 EO (Ethylenoxideinheiten) beschrieben werden.

Es werden hier nur komplexe Mischungen von Polyetherpolyolen mit Rizinusöl-basierendem Polyol, umfassend mindestens fünf Komponenten beschrieben. Die in dieser Anmeldung beschriebenen Löslichkeitsprobleme mit Polyesterpolyolen und Pflanzenöl-basierenden Polyolen lassen sich mit der dort beschriebenen Methode nicht lösen. Zumal neben der Verwendung von Pflanzenöl-basierenden Polyolen synthetische Polyole mitverwendet werden müssen.

Besonders wenn eine entsprechende Polyolmischung nach ihrer Herstellung nicht umgehend verwendet werden kann oder keine Möglichkeit besteht, sie bis zur Verwendung ständig zu rühren, um sie homogen zu halten, ist eine entsprechende Lagerstabilität dringend erforderlich.

Oftmals werden Polyolmischungen zur Verschäumung mit allen nötigen Komponenten, außer dem Isocyanat, vermischt und die Mischung in dieser Form transportiert und bis zur Verschäumung gelagert. Hierzu können zu den Polyolen die nach dem Stand der Technik bekannten und benötigten Stoffe zugesetzt werden wie z.B. Treibmittel, Stabilisatoren, Katalysatoren, Farbstoffe, Flammschutzmittel, sowie weitere Hilfsstoffe, die zur Verarbeitung, Herstellung und Verwendung des Schaums benötigt werden. Solche Zusatzstoffe enthaltenden Polyolmischungen werden auch als "Systeme" oder in europäischen Raum als "A-Komponente" bezeichnet.

Im der weiteren Betrachtung werden unter dem Begriff Polyolmischung sowohl die Polyolmischungen selbst als auch die oben beschriebenen Zusatzstoffe enthaltenden Mischungen verstanden.

Für eine vielseitige Einsetzbarkeit der Polyolmischungen ist es notwendig, dass sie an Ort und Zeit ihres Einsatzes mit möglichst geringem Aufwand direkt verwendet werden können. In diesem Zusammenhang ist insbesondere das Vorliegen der Polyolmischung in homogener Form, das heißt beispielsweise bei Vorliegen einer echten Lösung einem Einphasensystem, aber auch bei stabilen Emulsionen das über einen längeren Zeitraum nicht entmischende Emulgat bedeutend. Dies ist besonders dann von Bedeutung, wenn die Polyolmischungen nicht direkt verwendet werden können, sondern bei den unterschiedlichen in der Praxis vorkommenden Transport- und Lagerbedingungen (Temperaturbelastung, wechselnde Temperaturen, fehlende Aggitationmöglichkeit, etc.) gelagert werden müssen.

In der Praxis übliche Methoden zur Herstellung und zum Erhalt der Homogenität bzw. Verhinderung der Phasentrennung der Systeme bestanden darin, die Komponenten in den Vorrats- und Verteilungstanks mit aufwändigen Rührwerken oder durch ständiges Umpumpen in Bewegung zu halten. Eine Verhinderung der Separation der Komponenten und eine ausreichende Homogenisierung sind jedoch selbst mit diesen technisch aufwändigen Maßnahmen nicht immer mit Sicherheit zu gewährleisten.

Bei einer nicht ausreichenden Homogenisierung stimmt bei der Mischung mit den Polyisocyanaten die Stöchiometrie, d.h. das vorgegebene Verhältnis der Polyole in der Polyolmischung, der reaktiven Mischung in den Bereichen der Inhomogenität nicht mehr. Die Einhaltung der erforderlichen wichtigen Parameter der aufeinander abgestimmten Komponenten ist in diesen Fällen nicht mehr gewährleistet, was die Herstellung von fehlerhaften Polyurethanschäumen zur Folge hat.

Man hat deshalb versucht, unter Verwendung von Dispergier- und/oder Emulgierhilfsmitteln diese Nachteile zu überwinden.

So wird in der WO-2005/085310 eine Prepolymerzusammensetzung, insbesondere zur Erzeugung von Polyurethanmontage- und Dämmschäumen vorgeschlagen, wobei die Prepolymerzusammensetzung Polyurethanprepolymere enthält aus der Reaktion einer ersten Komponente, welche hydrophobe Polyesterpolyole mit mindestens zwei Hydroxygruppen umfasst und einer zweiten Komponente, welche Polyisocyanate mit mindestens zwei Isocyanatgruppen umfaßt, welche dadurch gekennzeichnet ist, dass die Polyesterpolyole zumindest teilweise Umesterungsprodukte aus pflanzlichen oder tierischen Ölen mit aromatischen Di- und/oder Tricarbonsäuren, deren Estern oder Anhydriden sowie Polyolen sind.

Gemäß der EP-0909792 werden 1K-Polyurethansynthesezusammensetzungen beschrieben, enthaltend ein synthetisches Polymer (T) als Emulgator, bestehend aus
(I) einem Copolymerrückgrat (TR), gebildet aus
   (TR1) mindestens einer ethylenisch ungesättigten C₄-C₁₂-Dicarbonsäure, deren Anhydrid oder deren Mischungen,
   (TR2) mindestens einem C₂-C₄₀-Olefin, und
(II) einem von dem Copolymerrückgrat ausgehenden Polyalkylenoxid (TP), gebildet aus (TP1) mindestens einem C₂- bis C₂₀-Oxiran.

Als weitere Komponenten der 1K-Polyurethansynthesezusammensetzungen sind eine erste und eine zweite Verbindung enthalten mit mindestens zwei reaktiven Wasserstoffatomen (a), wobei die erste Verbindung in der zweiten Verbindung unlöslich ist, wobei die erste Verbindung ein Propylen- und Ethylenoxid aufweisendes Polyetherpolyol und die zweite Verbindung ein C₂-C₂₀-Alkylendiol ist, und die erste Verbindung in der zweiten Verbindung unlöslich ist, wenn eine 1 : 1-Mischung, beider Verbindungen innerhalb eines Monats nach Herstellung der Mischung einer Phasenseparation unterliegt, wenn die Mischung nicht bewegt wird.

Bei dieser speziellen Anwendung im 1K-Schaum werden keine Pflanzenöl-basierenden Polyole verwendet.

Die so hergestellten Mischungen umfassen recht komplexe synthetische polymere Systeme, die erst durch aufwändige Synthese zugänglich sind.

Gegenstand der EP-1 161 474 ist ein Verfahren zur Herstellung offenzelliger Polyurethanschäumen durch Umsetzung von Polyisocyanaten mit einer als wässrige Emulsion vorliegenden Polyolkomponente bestehend aus einer Mischung aus mindestens einem mit Wasser nicht mischbaren Polyol und mindestens einem Polyesterpolyol oder Polyesterpolyetherpolyol. Wesentlich für das dortige Verfahren ist, dass die Polyolkomponente als Emulsion eingesetzt wird, wobei als Emulgatoren ionische oder/und nichtionische Tenside verwendet werden können. Die Stabilität der erhaltenen Emulsionen wird nicht beschrieben.

In der WO-96/12759 wird beschrieben, dass bei der Herstellung von PU-Schäumen die Löslichkeit von Kohlenwasserstoffen als Treibmittel in den Polyolen verbessert werden kann, indem man Rizinusöl (= Castor Oil) zugibt. In Beispiel 1 ist bei einer Polyetherpolyol basierenden Mischung aber auch zu erkennen, dass bei Zugabe von höheren Anteilen Rizinusöl die Mischung wieder separiert, die Homogenität dementsprechend wieder verloren geht.

Die im Stand der Technik aufgeführten Emulgatoren sind nur über aufwändige Mehrstufensynthesen herzustellen und des Weiteren enthalten die Mischungen Komponenten, die nicht gleichermaßen in allen technischen Anwendungsgebieten der Polyurethanschäume eingesetzt werden können oder sogar unverträglich sind.

Die Aufgabe der vorliegenden Erfindung war es, die Nachteile des Standes der Technik zu überwinden und Kompatibilisierungsmittel, für nichtmischbare Polyolzusammensetzungen zur Verfügung zu stellen.

Überraschenderweise wurde gefunden, dass Urethan- oder Harnstoffgruppen enthaltende Polyether in der Lage sind, diese Aufgabe zu erfüllen.

Ein Gegenstand der Erfindung ist daher die Verwendung von Urethan- oder Harnstoffgruppen enthaltenden Polyethern als Kompatibilisierungsmittel für Polyolzusammensetzungen enthaltend mindestens zwei nicht miteinander mischbare Polyole, erhalten durch die Umsetzung von
A. mindestens einem Di- und/oder Polyisocyanat mit
B.
   (a) mindestens einem hydrophilen Polyether, der statistisch mindestens eine OH- und/oder NH₂- und/oder -NH-Funktion trägt und
   (b) mindestens einem hydrophoben Polyether, der statistisch mindestens eine OH- und/oder NH₂- und/oder -NH-Funktion trägt und
   (c) gegebenenfalls weiteren Verbindungen, die mindestens eine OH- und/oder NH₂- und/oder NH-Funktion und/oder andere isocyanat-reaktive Gruppen wie Carbonsäure- oder Epoxid-Funktionen tragen,
   gemäß den Maßgaben von Anspruch 1.

Bei der Herstellung der oben aufgeführten Verbindungen werden somit die hydrophoben Polyether mit den hydrophilen Polyethern verknüpft.

Bei der Umsetzung von Isocyanaten (A) mit Alkoholen oder Aminen bilden sich die entsprechenden Urethan- oder Harnstoffderivate. Es bilden sich bei der Umsetzung der oben aufgeführten Komponenten Verbindungen in Form von Gemischen, deren Verteilung durch die Reaktionsführung aber auch durch statistische Gesetze bestimmt wird.

Geeignete di- oder mehrfachfunktionelle Isocyanate können sowohl aromatisch als auch aliphatisch sein. Beispiele sind Methylen-diphenylisocyanat (MDI), Toluol-Diisocyanat (TDI), 1,6-Hexamethylendiisocyanat, 1-isocyanato-3,5,5-trimethyl-1,3-isocyanatomethylcyclohexan (IPDI) oder Polymethylendiphenylisocyanat (PMDI). Des Weiteren eignen sich auch trifunktionelle und multifunktionelle Isocyanate die zum Beispiel unter den Handelsnamen Desmodur^{®} N 100, Desmodur N 3200, Desmodur N 3300 und Desmodur^{®} N 3600 (Desmodur ist ein Warenzeichen der Firma Bayer Material Science AG) erhältlich sind. In Kombination mit mehrfachfunktionellen Isocyanaten lassen sich auch monofunktionelle Isocyanate im Reaktionsgemisch insbesondere zur Steuerung der Polarität und Molekulargewichtsverteilung nutzen.

Als hydrophile Polyether (Komponente B (a)) werden hier solche Polyether bezeichnet, bei denen mehr als 60 mol-% der Alkoxy-Einheiten Ethylenoxid-Einheiten sind. Als hydrophobe Polyether (Komponente B (b)) werden hier solche Polyether bezeichnet, bei denen maximal 45 mol-% der Alkoxy-Einheiten Ethylenoxid-Einheiten sind.

Geeignete Polyether können durch Umsetzung eines Starters, der bevorzugt ein Alkohol, ein Amin oder ein Alkanolamin ist, durch Anlagerung von Monomeren gewonnen werden. Startalkohole können z.B. Wasser, Methanol, Ethanol, 1-Butanol, Bisphenol-A, 2-Aminoethanol, Ethylenglykol, Propylenglykol, Glycerin, Oligo- und Polyglycerine, 1,3-Dihydroxypropan, 1,4-Dihydroxybutan, 1,6-Dihydroxyhexan, 1,2,4-Trihydroxybutan, 1,2,6-Trihydroxyhexan, 1,1,1-Trimethylolpropan, Pentaerytritol, Oligomere des Pentaerytritols, Polycaprolacton, Xylitol, Arabitol, Sorbitol, Mannitol, Ethylendiamin, Ammoniak, 1,2,3,4-Tetrahydroxybutan, Rizinusöl oder Fruktose sein.

Die Oligo- oder Polyglycerine sind zum einen lineare Verbindungen der allgemeinen Formel

HO-CH₂-CH(OH)-CH₂-O-[CH₂-CH(OH) -CH₂-O]ₙ-H

worin
- n: 1 bis 9, vorzugsweise 1 bis 6, insbesondere 1 bis 3, speziell 1 und 2 bedeutet; die als Reinstoffe als auch in statistischer Mischung miteinander vorliegen können und deren Mittelwert der statistischen Verteilung dem Wert "n" entspricht.

Die in den hier angeführten Formeln wiedergegebenen Indexzahlen und die Wertbereiche der angegebenen Indices verstehen sich daher als die Mittelwerte der möglichen statistischen Verteilung der tatsächlichen isolierten Strukturen und/oder deren Mischungen. Dies gilt auch für als solche an sich exakt wiedergegebene Strukturformeln.

Darüber hinaus können die verwendeten Polyglycerine auch verzweigt sein und cyclische Anteile enthalten. Sie enthalten etwa 0 bis 5 Gew.-% Glycerin, 15 bis 40 Gew.-% Diglycerin, 30 bis 55 Gew.-% Triglycerin, 10 bis 25 Gew.-% Tetraglycerin, 0 bis 10 Gew.-% höhere Oligomere. Die bevorzugt verwendeten Polyglycerine enthalten 15 bis 35 Gew.-% Diglycerin, 38 bis 52 Gew.-% Triglycerin, 15 bis 25 Gew.-% Tetraglycerin, < 10 Gew.-% höhere Oligomere und < 2 Gew.-% cyclische Verbindungen. Besonders bevorzugt werden Polyglycerine, die im statistischen Mittel Diglycerin enthalten, verwendet.

Als Monomere geeignet sind zum Beispiel Ethylenoxid, Propylenoxid, Verbindungen aus der Gruppe Tetrahydrofuran, 1,2-Epoxybutan (n-Butylenoxid), 2,3-Epoxybutan (iso-Butylenoxid), sowie Dodecyloxid. Dabei kann die Verteilung der Monomeren beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen oder graduell verteilt sind. Solche Polyether können statistisch angeordnet sein oder eine Blockstruktur haben. Die Indizes von Strukturformeln in dieser Anmeldung sind damit als positive reelle Zahlenwerte zu verstehen und nicht nur als ganzzahlige Zahlenwerte.

Geeignete hydrophile Polyether (Komponente B(a)), die ein oder mehrere aktive Wasserstoffatome tragen, lassen sich mit Formel (I) beschreiben

(R¹)ₒ[R²[ (E)_{q}-(P)ᵣ-R³]ₚ]ₛ (I)

wobei
- R¹: bei o = 1, s-funktionelle nicht reaktive Anteile eines Initiators,
- R²: unabhängig voneinander O, NR⁴, NH oder N,
- E: eine Ethoxy-Funktion, vorzugsweise der Rest -(CH₂-CH₂-O),

- P: gleiche oder verschiedene Alkoxyfunktion(en) mit mindestens drei Kohlenstoffatomen,
- R³: gleiche oder verschiedene Reste aus der Gruppe H, -CₜH₂ₜ-N(R⁴)H und/oder -CₜH₂ₜ-NH₂,
- R⁴: gleiche oder verschiedene Alkyl- oder Arylfunktionen mit 1 bis 20 Kohlenstoffatomen, bevorzugt Methyl, Ethyl oder Phenyl,
- o: 0 oder 1,
- p: 1, 2 oder 3,
- q: 10 bis 500, vorzugsweise 15 bis 400, insbesondere 20 bis 300,
- r: 0 bis 330, vorzugsweise 1 bis 200, insbesondere 2 bis 100,
- s: 1 bis 10, vorzugsweise 2 bis 8, insbesondere 2 bis 4,
- t: 2 bis 5,
sind, mit der Maßgabe, dass
q > 0,6 *(q + r), ist und
die als Reinstoffe als auch in statistischer Mischung miteinander vorliegen können und deren Mittelwert der statistischen Verteilung dem Wert der Indices o bis t entspricht.

Geeignete hydrophobe Polyether (Komponente B (b)) die ein oder mehrere aktive Wasserstoffatome tragen, lassen sich ebenfalls mit Formel (I) beschreiben,
wobei
- q: 0 bis 400, vorzugsweise 1 bis 300, insbesondere 2 bis 200,
- r: 10 bis 500 vorzugsweise 15 bis 400, insbesondere 20 bis 300,
sind, mit der Maßgabe, dass
q < 0,45 *(q + r), ist und
die als Reinstoffe als auch in statistischer Mischung miteinander vorliegen können und deren Mittelwert der statistischen Verteilung dem Wert der Indices o bis t entspricht.

Die mit der Formel (I) beschriebenen Polyether können gegebenenfalls durch das Verfahren der Pfropfpolymerisation weiter modifiziert werden. Dazu werden die Polyether in Gegenwart radikalischer Aktivatoren mit Doppelbindungen tragenden Monomeren umgesetzt. Durch die Einstellung des Pfropfungsgrades und die Menge und Art der eingesetzten Monomeren bzw. durch die Verfahrensweise zur Herstellung der Mischpolymerisate ist es möglich die Eigenschaften der Polyether gezielt zu verändern. Geeignete Monomere sind zum Beispiel Methylmethacrylat, Acrylsäure, Styrol oder Maleinsäureanhydrid. Ein derartiges Verfahren wird zum Beispiel in der Auslegeschrift DE-1111 394 beschrieben. Die in dieser Literatur beschriebenen Polyether können auch erfindungsgemäß verwendet werden, wenn sie statistisch mindestens eine OH- und/oder NH₂- und/oder NH-Funktion tragen.

Spezielle Beispiele für geeignete hydrophile Polyether sind: 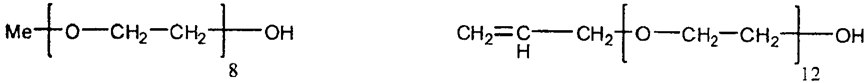 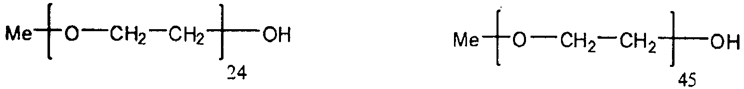 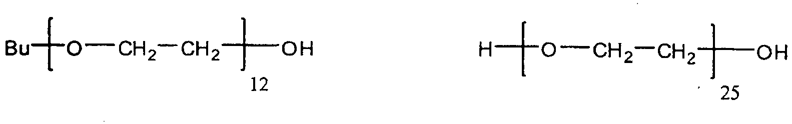 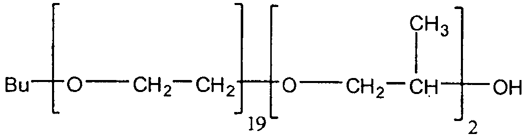 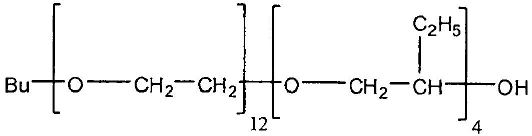 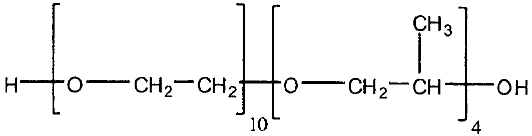 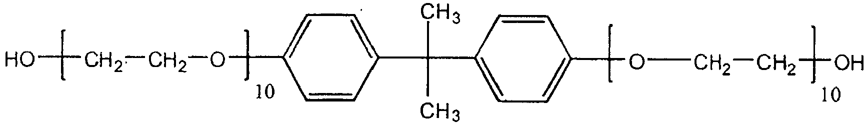 die als Reinstoffe als auch in statistischer Mischung miteinander vorliegen können und deren Mittelwert der statistischen Verteilung dem Wert der Indices entspricht.

Spezielle Beispiele für geeignete hydrophobe Polyether sind: 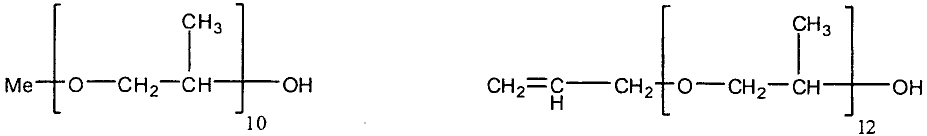 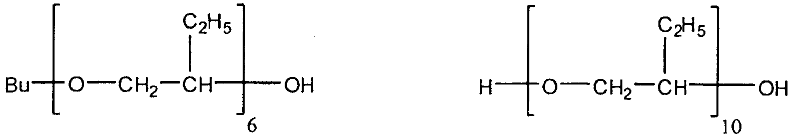 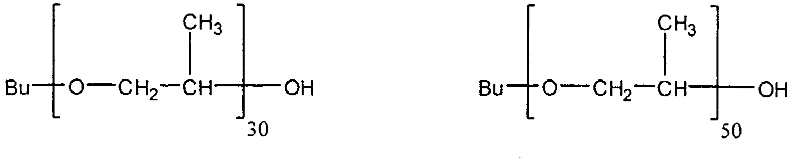 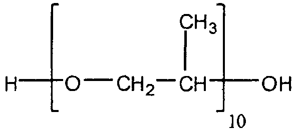 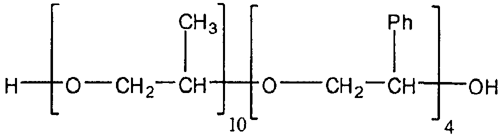 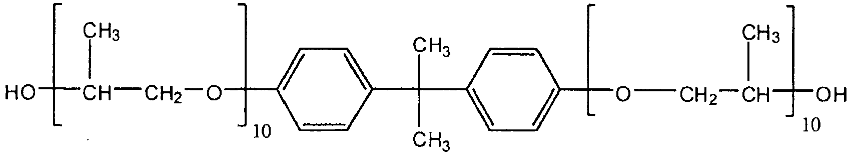 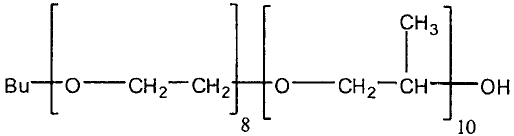 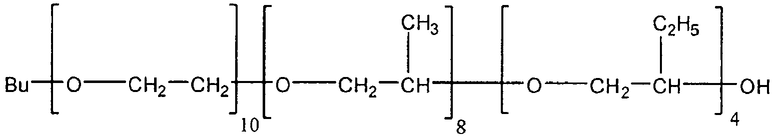 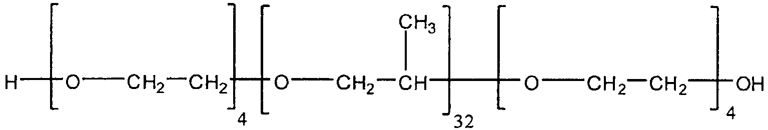 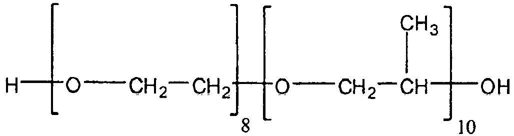 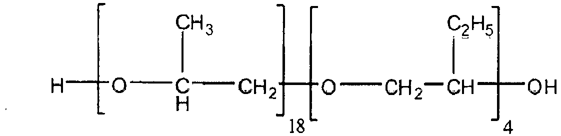 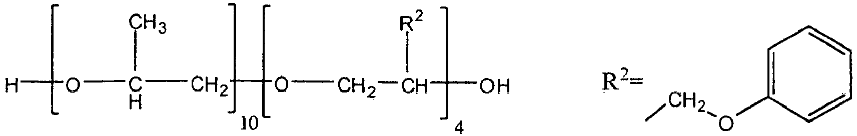 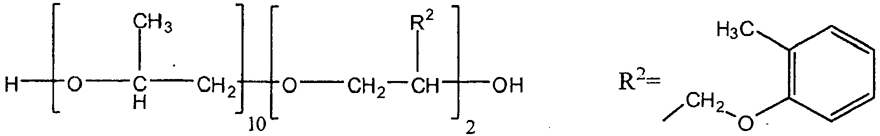 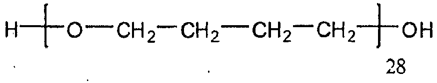 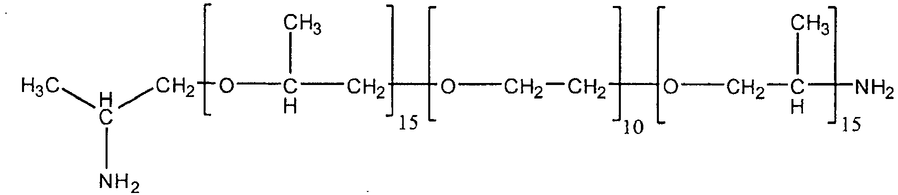 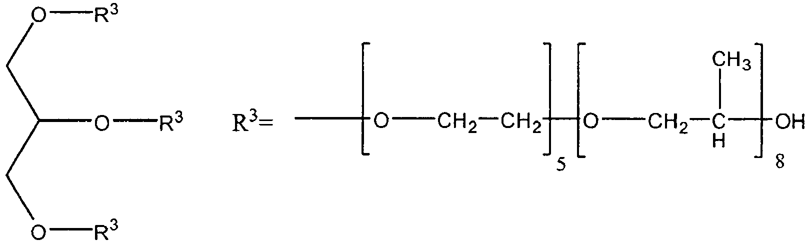 die als Reinstoffe als auch in statistischer Mischung miteinander vorliegen können und deren angegebener Zahlenwert dem Mittelwert der statistischen Verteilung des Wertes der Indices entspricht.

Weitere Verbindungen (c) die mindestens eine OH- und/oder NH₂- und/oder NH-Funktion und/oder andere isocyanatreaktive Gruppen wie Carbonsäure- oder Epoxid-Funktionen tragen sind zum Beispiel, Polyether, die nicht zu den oben aufgeführten erfindungsgemäß verwendeten hydrophilen oder hydrophoben Polyethern a) und b) zählen, einwertige Alkohole, wie Methanol, Ethanol, Fettalkohole, Poly-(ethylen-co-1,2-butylen)-monool, fluorierte Alkohole wie C₆F₁₃-CH₂CH₂OH, Alkylphenole, oder mehrwertige Alkohole, wie 1,2-Propandiol, 1,6-Hexandiol, Poly-(ethylen-co-1,2-butylen)-diol, Poly-(hexamethylen-carbonat)-diol, Glucose, Fructose, Polyglycerin, Polyestermonoole oder Polyesterdiole, wie Poly-(caprolacton)-diol oder Poly-(hexamethylenphthalat)-diol oder fluorierte Polyether.

Weitere geeignete Verbindungen (c) sind zum Beispiel fettsäuremodifizierte Alkohole. Dabei handelt es sich um zwei oder mehrwertige Alkohole, bei denen die OH-Funktionen teilweise verestert sind.

Weitere geeignete Verbindungen sind primäre und sekundäre Amine mit aktiven Wasserstoffatomen, wie zum Beispiel Ethylamin, 1,6-Hexamethylendiamin, Diethylentriamin, Polyetheramine, Polyethylenimin oder zum Beispiel Poly-(acrylsäurenitril-cobutadien) mit Amin-Endgruppen.

Weitere geeignete Verbindungen (c) sind zum Beispiel fettsäuremodifizierte Amine. Dabei handelt es sich um zwei oder mehrwertige Amine, bei denen die Amingruppen teilweise amidisiert sind.

Außerdem eignen sich Alkoholamine, wie zum Beispiel Diethanolamin oder Ethanolamin. Auch hier können die OH- bzw. die Aminfunktionen teilweise verestert bzw. amidisiert vorliegen.

Die Umsetzung verschiedener Polyether mit multifunktionellen Isocyanaten erlaubt das genaue Einstellen des Verhältnisses von hydrophilen zu hydrophoben Strukturelementen durch die Wahl der Menge und der Art an hydrophilen und hydrophoben Polyethern. Des Weiteren lassen sich durch das Einbringen weiterer Alkohole oder Amine gezielt andersartige diverse hydrophobe oder hydrophile Strukturelemente einbringen. Zum Beispiel bildet sich bei der Verwendung von 1,6-Hexandiol ein hydrophober Alkylenblock und durch den Einsatz von Dimethylolpropansäure ein Strukturelement mit einer Carbonsäurefunktionalität.

Zudem lassen sich durch die Ausnutung von Reaktivitätsunterschieden zwischen verschiedenen Isocyanat-Funktionen in einem multifunktionellen Isocyanat bestimmte Strukturen bevorzugt bilden. Zum Beispiel durch die Bildung von Prepolymeren zur Bildung bestimmter Block- oder verzweigter Strukturen.

Gleiches erlaubt die Ausnutzung von Reaktivitätsunterschieden verschiedener OH-, NH₂- oder NH-Funktionen.

Vorhersagen über Wirksamkeit eines Kompatibilisators können nur in gewissem Maße gegeben werden. Der Fachmann ist deshalb genötigt, die Variationsmöglichkeiten weitgehend empirisch zu erproben.

Möglich sind homogene Polyolmischungen, enthaltend auf nachwachsenden Rohstoffen basierende, insbesondere auf pflanzlichen Rohstoffen basierende Polyole, gegebenenfalls in Mischung mit Polyesterdiolen oder Polyesterpolyolen.

Möglich sind homogene Polyolmischungen, enthaltend diese Kompatibilisierungsmittel und gegebenenfalls weitere Hilfs- und Zusatzstoffe.

Möglich sind Polyolmischungen bestehend aus Polyesterpolyolen und auf nachwachsenden Rohstoffen, insbesondere pflanzlich basierten Polyolen zur Herstellung von PU-Schäumen (Hartschäume) gegebenenfalls enthaltend weitere Hilfs- und Zusatzstoffe.

Möglich sind Polyolmischungen, enthaltend Kompatibilisierungsmittel, bestehend aus mindestens zwei nicht miteinander mischbaren Polyetherpolyolen mit unterschiedlichem Gehalt an Polyethylenoxid-Einheiten zur Verwendung bei der Herstellung von Polyurethan- und/oder Polyisocyanurat- und/oder Polyharnstoffschäumen, gegebenenfalls enthaltend weitere Hilfs- und Zusatzstoffe.

Möglich ist die vorteilhafte Verwendung von aus nachwachsenden Rohstoffen hergestellten Polyolen in den Polyolzusammensetzungen.

Aus den homogenen Mischungen unter Verwendung der Kompatibilisierungsmittel sind (homogene) reaktive Mischungen zugänglich, die aus:
(I) den homogenen Polyolmischungen, enthaltend diese Kompatibilisierungsmittel und
(II) einem oder mehreren Isocyanaten
bestehen.

Kompatibilisierte Polyolmischungen die bei Umsetzung mit Polyisocyanaten zur Herstellung von Polyurethan- und/oder Polyisocyanurat- und/oder Polyharnstoffschäumen geeignet sind.

Möglich sind Polyurethan- und/oder Polyisocyanurat- und/oder Polyharnstoffschäume, hergestellt unter Verwendung der kompatibilisierten Polyolmischungen.

Die so hergestellten Polyurethanschäume können zur Herstellung von Formmassen, Beschichtungen, Folien und Fasern verwendet werden.

Möglich sind die durch den Zusatz der Kompatibilisierungsmittel hergestellten vor Phasentrennung stabilisierten Polyolmischungen, die gegebenenfalls auch weitere Hilfs- und Zusatzstoffe enthalten können.

Als Hilfs- und Zusatzstoffe werden hier unter anderem Treibmittel, Stabilisatoren, Katalysatoren , Flammschutzmittel, Pigmente, Farbstoffe und weitere Stoffe, wie beispielsweise, aber nicht abschließend erwähnt, auch Biocide, Antistatika, etc. verstanden, die zur Herstellung und Verwendung des Polyurethanschaums benötigt werden.

Möglich sind Polyurethanschäume, hergestellt unter Verwendung der homogenen Polyolmischungen.

Die erfindungsgemäß einzusetzenden Kompatibilisatoren werden in Polyolmischungen verwendet, die Polyesterpolyole und Naturöl basierende Polylole (NOPs) enthalten, da diese beiden Klassen von Polyolen beim Mischen häufig zur Phasentrennung neigen.
Mischungen dieser Art werden häufig bei der Herstellung von Polyurethan- oder Polyisocyanurat-Hartschäumen verwendet.

Möglich ist die Verwendung der erfindungsgemäß einzusetzenden Kompatibilisatoren in Polyetherpolyolmischungen, deren einzelne Komponenten unterschiedliche Polaritäten aufweisen. Dies kann z.B. durch einen unterschiedlichen Anteil an Polyethylenglykol hervorgerufen werden.
Mischungen mit erfindungsgemäß einzusetzenden Kompatibilisatoren können damit auch vorteilhaft bei der Herstellung von Weichschaumsystemen eingesetzt werden; diese weisen besondere mechanische Eigenschaften wie z.B. Viskoelastizität oder hohe Elastizität auf. Bislang konnten solche (inhomogene) Mischungen nur durch Agitation homogen gehalten werden.

Ebenso kann durch die kompatibilisierenden Eigenschaften der beschriebenen Strukturen die Löslichkeit von Treibmitteln verbessert/verändert werden; ein solcher Effekt wird für Alkoholalkoxylate in der WO-2007/094780 beschrieben.

Zur Herstellung der Schäume können alle geeigneten Polyole eingesetzt werden. Es kann sich hierbei um Poylether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können.

Entsprechend den geforderten Eigenschaften der Schäume werden spezielle Polyole verwendet wie beispielsweise beschrieben in: US-2007/0072951, WO-2007/111828, US-20070238800, US-6359022 und der WO-9612759.

Ebenso werden Pflanzenöl-basierenden Polyole in verschiedenen Patentschriften beschrieben, wie beispielsweise in der WO-2006/094227, WO-2004/096882, US-2002/0103091, WO-2006/116456 und EP-1678232.

Als Polyisocyanate für die Herstellung der Polyurethanschäume können die auf diesem Gebiet für die jeweiligen Schaumtypen üblichen Verbindungen wie sie z. B. in EP-1712578, EP-1161474, WO-058383, US-2007/0072951, EP-1678232 und der WO-2005/085310 genannt sind, verwendet werden.
Ebenso geeignet sind die oben aufgeführten, mehrfachfunktionelle Gruppen tragenden, Verbindungen (Isocyanate und Polyole), die zur Herstellung der erfindungsgemäßen Kompatibilisatoren verwendet werden.

Zur Herstellung eines Schaums wird ein Treibmittel benötigt. Es können alle bekannten Treibmittel eingesetzt werden. Dies kann als chemisches Treibmittel Wasser sein, welches durch Reaktion mit den Isocyanaten Kohlendioxid freisetzt. Es kann aber auch direkt Kohlendioxid als physikalisches Treibmittel verwendet werden oder andere Treibmittel, die durch einen geeigneten Siedepunkt bei der exothermen Reaktion verdampft werden. Beispiele hierfür sind Halogenkohlenwasserstoffe oder Kohlenwasserstoffe wie z.B. Pentan-Isomere. Es sind auch Kombinationen der beiden Methoden möglich.
Die Urethan-Schaumreaktion wird üblicherweise durch geeignete Katalysatoren ausgelöst bzw. gesteuert. Es werden hier beispielsweise tertiäre Amine oder Metall-haltige Katalysatoren (enthaltend Zinn-, Kalium-, Zink-Verbindungen) eingesetzt.

Als Stabilisatoren können die nach dem Stand der Technik bekannten Substanzen eingesetzt werden. Meist handelt es sich hierbei um organisch modifizierte Siloxane wie sie zum Beispiel in EP-0839852, WO-2005/118668, US-20070072951, DE-2533074, EP-1537159, EP-1712576, EP-1544235, EP-0533202, US-3933695, EP-0780414, DE-4239054, DE-4229402, DE-102004001408, EP-0867465 und den darin zitierte Dokumenten beschrieben werden.

Die für die Herstellung der Polyurethanschäume verwendbaren Hilfs- und Zusatzmittel wie z. B. Katalysatoren, Stabilisatoren, Flammschutzmittel, Treibmittel sind ebenfalls die aus dem Stand der Technik bekannten Komponenten. Eine zusammenfassende Darstellung des Stands der Technik, der verwendeten Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987, (3), Seite 1561 bis 1757, und in "Ullmann's Encyclopedia of Industrial Chemistry" Vol. A21, VCH, Weinheim, 4. Auflage 1992, S. 665 bis 715.

Die Kompatibilisatoren und deren erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Ausführungsbeispiele:

Nachfolgende Beispiele sollen zur Verdeutlichung der Erfindung dienen, sie stellen jedoch keinerlei Einschränkung dar.

Als homogen sind Zusammensetzungen im Rahmen dieser Anmeldung anzusehen, die beispielsweise beim Stehen in einem 100 ml Standzylinder über den angegebenen Zeitraum (in Stunden) bei der angegebenen Raumtemperatur keine Phasentrennung von über 3 ml erkennen lassen. Ein solches Ergebnis wird als "gut" bezeichnet. Ist die Homogenität sogar über einen längeren Zeitraum gegeben oder aber die Phasenausbildung wesentlich geringer als 50 % des vorgegebenen Wertes, so ist das Ergebnis als "sehr gut" zu bezeichnen. Ist hingegen die Phasenbildung stärker ausgeprägt und größer als 150 % des vorgegebenen Wertes, so ist das Ergebnis als "ausreichend" zu bezeichnen, bei mehr als 200 % als "ungenügend".
Generell wurde festgestellt, dass die Lagerstabilität mit höherer Temperatur schlechter wird. Allerdings wird in der Praxis oftmals beim Transport oder Lagerung einer Polyolmischung nicht bei Raumtemperatur gearbeitet sondern auf 30-40°C erwärmt. Daher wurden die Versuche bei Temperaturen von 20 und 40°C durchgeführt.

### Herstellung der Kompatibilisierer:

### Beispiel 1:

28 g eines hydrophoben Polyethermonools (butanolgestartet, M = ca. 1.800 g/mol, w(EO) = 0%) wurden mit 36 g eines hydrophoben Polyetherdiols (M = ca. 2.200 g/mol, w (EO) = 10%) und 24 g eines hydrophilen Polyethermonools (methanolgestartet, M = 1.100 g/mol, w (EO) = 100%) gemischt und 13 g Desmodur N 3.200 (technisches dreifach funktionelles Isocyanat der Firma Bayer AG), versetzt. Anschließend wurden noch 100 g Propylencarbonat zugesetzt. Diese Mischung wurde auf 100°C aufgeheizt und schließlich mit 0,1 g Tegokat 722 (Bi-Octoat) (erhältlich bei TIB Mannheim) versetzt. Anschließend wurde noch 4 Stunden bei dieser Temperatur gerührt.

### Beispiel 2:

26 g eines hydrophoben Polyethermonools (butanolgestartet, M = ca. 1.800 g/mol, w(EO) = 0%) wurden mit 34 g eines hydrophoben Polyetherdiols (M = ca. 2.200 g/mol, w(EO) = 10%), 15 g eines hydrophilen Polyethermonools (methanolgestartet, M = 1.100 g/mol, w(EO) = 100%) und 14 g eines hydrophilen Polyethermonools (M = 2.000 g/mol, w (EO) = 100%) gemischt und 12 g Desmodur N 3.200 (technisches dreifach funktionelles Isocyanat der Firma Bayer AG), versetzt. Anschließend wurden noch 100 g Propylencarbonat zugesetzt. Diese Mischung wurde auf 100°C aufgeheizt und schließlich mit 0,1 g Tegokat 722 (Bi-Octoat) (erhältlich bei TIB Mannheim) versetzt. Anschließend wurde noch 4 Stunden bei dieser Temperatur gerührt.

### Beispiel 3:

34 g eines hydrophoben Polyethermonools (butanolgestartet, M = ca. 1.800 g/mol, w (EO) = 0%) wurden mit 30 g eines hydrophoben Polyetherdiols (M = ca. 2.200 g/mol, w(EO) = 10%) und 25 g eines hydrophilen Polyethermonools (methanolgestartet, M = 2.000 g/mol, w(EO) = 100%) gemischt und 11 g Desmodur N 3.200 (technisches dreifach funktionelles Isocyanat der Firma Bayer AG), versetzt. Anschließend wurden noch 100 g Propylencarbonat zugesetzt. Diese Mischung wurde auf 100°C aufgeheizt und schließlich mit 0,1 g Tegokat 722 (Bi-Octoat)(erhältlich bei TIB Mannheim) versetzt. Anschließend wurde noch 4 Stunden bei dieser Temperatur gerührt.

### Beispiel 4:

23 g eines hydrophoben Polyethermonools (butanolgestartet, M = ca. 1.800 g/mol, w(EO) = 0%) wurden mit 30 g eines hydrophoben Polyetherdiols (M = ca. 2.200 g/mol, w (EO) = 10%) und 37 g eines hydrophilen Polyethermonools (methanolgestartet, M = 2.000 g/mol, w(EO) = 100%) gemischt und 10 g Desmodur N 3.200 (technisches dreifach funktionelles Isocyanat der Firma Bayer AG), versetzt. Anschließend wurden noch 100 g Propylencarbonat zugesetzt. Diese Mischung wurde auf 100°C aufgeheizt und schließlich mit 0,1 g Tegokat 722 (Bi-Octoat)(erhältlich bei TIB Mannheim) versetzt. Anschließend wurde noch 4 Stunden bei dieser Temperatur gerührt.

### Vergleichsbeispiel 1:

Als Vergleichsbeispiel wurde Pluronic 10500 (A-B-A-Blockpolyether der Firma BASF AG) verwendet. Der Massenanteil an Ethylenoxid-Einheiten beträgt 50 %.

### Vergleichsbeispiel 2:

### Vorasurf 504

Als weiteres Vergleichsbeispiel wurde Vorasurf 504 (A-B-A-Blockpolyether aus Buthylenoxid und Ethylenoxid der Firma DOW) verwendet.

### Vergleichsbeispiel 3:

Als weiteres Vergleichsbeispiel wurde ein Nonylphenol-Ethoxylat mit 40 EO verwendet wie es in US 2007 0238800 verwendet wird.

### Anwendung der Kompatibilisierer in Polyolmischungen:

Es wurden Lagerversuche mit verschiedenen Polyol-Mischungen durchgeführt.

### Verwendete Rohstoffe:

Polyol A: Stepanpol PS 2352 (von Stepan)
Polyol B: Stepanpol PS 1922 (von Stepan)
Polyol C: Terol 563 (von Oxid)
Polyol D: Terate 7540 (von Invista)
Polyol E: Terate 2541 (von Invista)
Polyol F: Rizinusöl (Fa. Alberding + Boley, Krefeld )
Polyol G: Voranol 3322 (von Dow)
Polyol H: EO-reiches Polyol, Voranol CP 1421 (von Dow)
Polyol I: Pflanzenöl-basierendes Polyol BiOH^{™} 5000 von Cargill
Polyol K: Hyperlite^{®} Polyol 1629 (von Bayer)
Polyol L: Trimethylolpropan-gestartetes Polyglykol, Ethylenoxid basierend mit Molmasse 1200 g/mol

In Tabelle 1 sind die verwendeten Polyol-Komponenten und deren Anteile, die jeweiligen Kompatibilisierer und deren Anteile, die Lagerungstemperatur und die Stabilität der Mischungen zusammengefasst. Es wurde in den folgenden Zeiträumen die Stabilität optisch beurteilt: 2 h, 4 h, 8 h, 16 h, 24 h, 36 h, 48 h und dann im Abstand von 24 h und eine qualitative Beurteilung vorgenommen.

| Bsp. | Polyol,Teile | Polyol, Teile | Kompat., Teile | Temp. | Stabilität |
|---|---|---|---|---|---|
| 5 | A, 46 | F, 50 | Bsp.1, 4 | 40°C | 48 h, gut |
| 6 | A, 46 | F, 50 | Bsp.2, 4 | 40°C | 48 h, gut |
| 7 | A, 46 | F, 50 | Bsp.3, 4 | 40°C | 40 h, gut |
| 8 | A, 46 | F, 50 | Bsp.4, 4 | 40°C | 48 h, sehr gut |
| 9 | C, 46 | F, 50 | Bsp.1, 4 | 40°C | 264 h, sehr gut |
| 10 | D, 46 | F, 50 | Bsp.1, 4 | 40°C | 264 h, sehr gut |
| 11 | E, 46 | F, 50 | Bsp.1, 4 | 40°C | 264 h, sehr gut |
| 12 | A, 46 | F, 50 | Bsp.1, 5 | 40°C | 240 h, sehr gut |
| 13 | B, 46 | F, 50 | Bsp.1, 4 | 40°C | 288 h, sehr gut |
| 14 | A, 76 | F, 20 | Bsp.1, 4 | 40°C | 72 h, gut |
| 15 | B, 76 | F, 20 | Bsp.1, 4 | 40°C | 48 h, gut |
| 16 | A, 76 | F, 20 | Bsp.4, 4 | 40°C | 48 h, gut |
| 17 | B, 76 | F, 20 | Bsp.4, 4 | 40°C | 48 h, gut |
| 18 | A, 76 | F, 20 | Bsp.4, 4 | 20°C | 480 h, gut |
| 19 | A, 77 | F, 20 | Bsp.4, 3 | 20°C | 480 h, gut |
| 20 | A, 78 | F, 20 | Bsp. 4, 2 | 20°C | 480 h, sehr gut |
| **21 | G, 66 | H, 30 | Bsp. 1, 4 | 20°C | 48 h, gut |
| **22 | G, 30 | H, 66 | Bsp. 1, 4 | 20°C | 120 h, gut |
| **23 | G, 66 | I, 30 | Bsp. 1, 4 | 40°C | 120 h, gut |
| **24*) | G, 66 | I, 30 | Bsp. 1, 4 | 40°C | 120 h, gut |
| **25*) | G, 30 | I, 66 | Bsp. 1, 4 | 40°C | 120 h, gut |
| **26*) | G, 66 | I, 30 | Bsp. 1, 4 | 20°C | 240 h, gut |
| **27 | K, 88 | H, 10 | Bsp. 1, 2 | 20°C | 120 h, gut |
| **28 | G, 66 | L, 30 | Bsp. 1, 4 | 20°C | 120 h, gut |
| Vgl.4 | A, 50 | F, 50 | | 40°C | <16 h, ungenügend |
| Vgl.5 | C, 50 | F, 50 | | 40°C | <16 h, ungenügend |
| Vgl.6 | D, 50 | F, 50 | | 40°C | <16 h, ungenügend |
| Vgl.7 | E, 50 | F, 50 | | 40°C | <16 h, ungenügend |
| Vgl.8 | B, 50 | F, 50 | | 40°C | <16 h, ungenügend |
| Vgl.9 | A, 76 | F, 20 | Vgl.2, 4 | 40°C | <4 h, ungenügend |
| Vgl.10 | A, 76 | F, 20 | Vgl.1, 4 | 40°C | <2 h, ungenügend |
| Vgl.11 | B, 76 | F, 20 | Vgl.2, 4 | 40°C | <4 h, ungenügend |
| Vgl.12 | B, 76 | F, 20 | Vgl.1, 4 | 40°C | <2 h, ungenügend |
| Vgl.13 | A, 76 | F, 20 | Vgl.3, 4 | 40°C | <4 h, ungenügend |
| Vgl.14 | G, 70 | H, 30 | | 20°C | <8 h, ungenügend |
| Vgl.15 | G, 30 | H, 70 | | 20°C | <4 h, ungenügend |
| Vgl. 16*) | G, 70 | I, 30 | | 40°C | 24 h, ungenügend |
| Vgl. 17*) | G, 30 | I, 70 | | 40°C | 24 h, ungenügend |
| Vgl. 18 | 70 | L, 30 | | 20°C | 4 h, ungenügend |

| | | | | | |
|---|---|---|---|---|---|
| *) Die Mischung wurde zusätzlich mit 2 Teilen Wasser versetzt. **) Referenzbeispiele (nicht erfindungsgemäß) | | | | | |

Die Beispiele zeigen, dass die Lagerstabilität der Polyolmischungen durch die Verwendung der erfindungsgemäßen Kompatibilisatoren deutlich verbessert werden kann. Die Vergleichsbeispiele bei denen keine oder nicht-erfindungsgemäße Kompatibilisatoren eingesetzt wurden zeigen eine deutlich geringere Lagerstabilität.
Beispielsweise wird in Vgl. 9 und Vgl. 10 schon nach 4 bzw. 2 Stunden eine ungenügende Stabilität beobachtet, während in Beispiel 16 nach 48 Stunden die Polyolmischung noch eine gute Stabilität aufweist.

### Herstellung von PU-Schäumen:

### Ausprüfung im Hartschaum:

### Beispiel 29:

Für die anwendungstechnische Ausprüfung der erfindungsgemäßen Formulierungen wurde folgende Schaumformulierung verwendet:

| Komponente | Einsatzmenge |
|---|---|
| Polyol* | 100 Teile |
| DMCHA | 1,5 Teile |
| Wasser | 2 Teile |
| TCPP | 15 Teile |
| Kosmos 75 MEG | 3,5 Teile |
| n-Pentan | 12 Teile |
| TEGOSTAB B 8469 | 2 Teile |
| | |
| MDI** | 205,7 Teile |
| * Mischung aus Beispiel 16 nach 12 h Lagerung | |
| ** polymeres MDI, 200 mPa^{∗}s, 31.5% NCO, Funktionalität 2.7 | |

DMCHA: Dimethylcyclohexylamin dient als aminischer Katalysator, TCPP: Trischloropropylphosphat ist ein Flammschutzmittel, Kosmos 75 MEG ist ein metallbasierender Katalysaotor von Goldschmidt, TEGOSTAB B 8469 ist ein Schaumstabilisator von Goldschmidt.

Die Durchführung der Verschäumungen erfolgte im Handmischverfahren. Dazu wurden Polyol, Katalysatoren, Wasser, Flammschutzmittel und Treibmittel in einen Becher eingewogen und mit einem Tellerrührer (6 cm Durchmesser) 30 s bei 1.000 Upm vermischt. Durch erneutes abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine mit Papier ausgekleidete Kastenform von 27 cm x 14 cm x 14 cm Größe überführt. Nach dem Aushärten wurden aus dem Schaum verschiedene Probekörper geschnitten und folgende Beurteilungen und Messungen durchgeführt:
Der Schaum wies eine sehr feine Zellstruktur auf. Bodenzonenstörungen waren nicht vorhanden.
Raumgewicht: 23,5 kg/m³
Lambda-Wert (parallel zur Steigrichtung): 25,3 mW/m*K
Lambda-Wert (senkrecht zur Steigrichtung): 22,7 mW/m*K
10 % Stauchhärte (parallel zur Steigrichtung): 194 kPa
10 % Stauchhärte (senkrecht zur die Steigrichtung): 52 kPa
Geschlossenzelligkeit: 85,6 %

### Vergleichsbeispiel 19:

Unter Verwendung der in Beispiel 29 beschriebenen Schaumformulierung wurde die Polyolmischung aus dem Vergleichsbeispiel 10 nach 12 h Lagerung als Polyolkomponente eingesetzt. Bei der Verschäumung kam es zu Kollapserscheinungen. Es wurde ein Schaumkörper von sehr minderwertiger Qualität erhalten.

### Ausprüfung im Weichschaum:

### Beispiel 30:

Die erfindungsgemäßen Polyolmischungen wurden in einer typischen Polyurethanheissweichschaumformulierung untersucht:
Rezeptur für die Herstellung der Polyurethanheißweichschäume:
100 Gew.-Teile der Polyolmischung aus Beispiel 23, 5,0 Gew.-Teile Wasser (chemisches Treibmittel), 1,0 Gew.-Teile TEGOSTAB B 2370, 0,15 Gew.-Teile Aminkatalysator (Triethylendiamin) 0,23 Gew.-Teile Zinnkatalysator (Zinn-2-ethylhexanoat), 5,0 Gew.-Teile Methylenchlorid (zusätzliches physikalisches Treibmittel), 63,04 Gew.-Teile Isocyanat (Toluylendiisocyanat, TDI-80)(Verhältnis von Isocyanatgruppen zu isocyanatverbrauchenden reaktiven Gruppen = 1,15).

### Durchführung:

Polyolmischung, Wasser, Katalysatoren und Stabilisator wurden in einem Pappbecher vorgelegt und mit einer Rührscheibe durchmischt (45 s mit 1000 U/min). Anschließend wurde das Methylenchlorid zugegeben und erneut 10 s mit 1000 U/min vermischt. Anschließend wurde das Isocyanat (TDI-80) zugegeben und noch einmal mit 2500 U/min für 7 s gerührt. Das Gemisch wurde dann in eine Kiste der Größe 30 cm x 30 cm x 30 cm gefüllt. Während des Aufschäumens wurde dann die Steighöhe mittels einer Ultraschallhöhenmessung gemessen. Die Steigzeit bezeichnet diejenige Zeit, die verstreicht, bis der Schaum seine maximale Steighöhe erreicht hat. Der Rückfall bezeichnet das Absacken der Schaumoberfläche nach dem Abblasen des Polyurethanheissweichschaumes. Dabei wird der Rückfall 3 min nach dem Abblasen gemessen. Das Raumgewicht wurde gemäß DIN EN ISO 845 und DIN EN ISO 823 gemessen. Die Zellzahl wurde mittels einer Lupe mit Skalierung an drei Stellen ausgezählt und die Werte gemittelt.

Man erhielt folgende Ergebnisse:
Steigzeit: 89 s
Steighöhe: 34 cm
Rückfall: 0,4 cm
Raumgewicht: 18,4 kg/m³
Zellenzahl: 7 Zellen/cm

### Ausprüfung im Formschaum:

### Beispiel 31:

Es wurde folgende Rezeptur verwendet:
100 Teile Polyolmischung wie in Beispiel 27_beschrieben, 0,5 Teile der TEGOSTAB^{®} B 4113, 3 Teile Wasser, 2 Teile Triethanolamin, 0,6 Teile TEGOAMIN^{®} 33 und 0,2 Teile Diethanolamin und eine Mischung aus 18,5 Teilen polymeres MDI (44V20 von Bayer) und 27,7 Teilen TDI (Toluylendiisocyanat,T80).

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form mit den Abmessungen 40x40x10 cm, die auf eine Temperatur von 40°C erwärmt war und ließ die Masse für 10 Minuten aushärten. Anschließend wurden die Aufdrückkräfte gemessen. Hierbei wurde der Schaum 10 mal auf 50% seiner Höhe komprimiert. Hierbei ist der 1. Messwert (AD 1 in Newton) ein Maß für die Offenzelligkeit des Schaums. Anschließend wurde (manuell) vollständig aufgedrückt um beim 11. Messwert (AD 11 in Newton) die Härte des aufgedrückten Schaums bestimmen zu können. Danach wurde der Schaum aufgeschnitten um Haut und Randzone zu beurteilen und die Zellenzahl (ZZ) zu bestimmen.

Es wurden die folgenden Ergebnisse erhalten:
AD 1 : 1180 N
AD 11 : 132 N
ZZ: 10 Zellen pro cm
Haut und Randzone wurden als "gut" beurteilt.
Dies entspricht einer Schaumqualität die den technischen Anforderungen entspricht.

Die Verschäumungsergebnisse zeigen, dass sich mit den erfindungsgemäßen Mischungen PU-Schäume von guter Qualität herstellen lassen, die keinerlei Nachteile aufgrund von Mischungproblemen der Polyole aufweisen. Die erfindungsgemäßen Kompatibilisierer haben keinen nachteiligen Einfluss auf die Verschäumung.

## Patentansprüche

1. Verwendung von Urethan- oder Harnstoffgruppen enthaltenden Polyethern als Kompatibilisierungsmittel für Polyolzusammensetzungen enthaltend mindestens zwei nicht miteinander mischbare Polyole, erhalten durch die Umsetzung von
A. mindestens einem Di- und/oder Polyisocyanat mit
B.
(a) mindestens einem hydrophilen Polyether, der statistisch mindestens eine OH- und/oder NH₂- und/oder NH-Funktion trägt und
(b) mindestens einem hydrophoben Polyether, der statistisch mindestens eine OH- und/oder NH₂- und/ oder NH-Funktion trägt und
(c) gegebenenfalls weiteren Verbindungen, die mindestens eine OH-und/oder NH₂- und/oder NH-Funktion und/oder andere isocyanat-reaktive Gruppen wie Carbonsäure- oder Epoxid-Funktionen tragen,
wobei als Komponente (a) mindestens ein Polyether der allgemeinen Formel (I) eingesetzt wird
(R¹)ₒ[R²[(E)_{q}-(P)ᵣ-R³]ₚ]ₛ (I)
wobei
R¹ bei o = 1, der s-funktionelle nicht reaktive Anteile eines Initiators,
R² unabhängig voneinander O, NR⁴, NH oder N,
E eine Ethoxy-Funktion, vorzugsweise der Rest - (CH₂-CH₂-O)-,
P gleiche oder verschiedene Alkoxyfunktion(en) mit mindestens drei Kohlenstoffatomen,
R³ gleiche oder verschiedene Reste aus der Gruppe H, -CₜH₂ₜ-N(R⁴)H und/oder -CₜH₂ₜ-NH₂,
R⁴ gleiche oder verschiedene Alkyl- oder Arylfunktionen mit 1 bis 20 Kohlenstoffatomen, bevorzugt Methyl, Ethyl oder Phenyl,
o 0 oder 1,
p 1, 2 oder 3,
q 10 bis 500,
r 0 bis 330,
s 1 bis 10,
t 2 bis 5,
sind, mit der Maßgabe, dass q > 0,6 * (q + r), ist,
und wobei
als Komponente (b) mindestens ein Polyether der allgemeinen Formel (I) eingesetzt wird, wobei
q 0 bis 400,
r 10 bis 500,
sind, mit der Maßgabe, dass q < 0,45 (q + r), ist,
wobei die Polyolmischungen Polyesterpolyole und Naturöl basierende Polylole enthalten.

## Claims

1. Use of polyethers containing urethane or urea groups as compatibilising agent for polyol compositions comprising at least two immiscible polyols, obtained by the reaction of
A. at least one di- and/or polyisocyanate with
B.
(a) at least one hydrophilic polyether which randomly carries at least one OH and/or NH₂ and/or NH function and
(b) at least one hydrophobic polyether which randomly carries at least one OH and/or NH₂ and/or NH function and
(c) optionally further compounds which carry at least one OH and/or NH₂ and/or NH function and/or other isocyanate-reactive groups such as carboxylic acid or epoxide functions,
where, at least one polyether of the general formula (I)
(R¹)ₒ[R²[(E)_{q}-(P)ᵣ-R³]ₚ]ₛ (I)
where
R¹ when o = 1, is the s-functional nonreactive fractions of an initiator,
R² independently of one another, is O, NR⁴, NH or N,
E is an ethoxy function, preferably the radical -(CH₂-CH₂-O)-,
P is identical or different alkoxy function(s) with at least three carbon atoms,
R³ is identical or different radicals from the group H, -CₜH₂ₜ-N(R⁴)H and/or -CₜH₂ₜ-NH₂,
R⁴ is identical or different alkyl or aryl functions having 1 to 20 carbon atoms, preferably methyl, ethyl or phenyl,
o is 0 or 1,
p is 1, 2 or 3,
q is 10 to 500,
r is 0 to 330,
s is 1 to 10,
t is 2 to 5,
with the proviso that q is > 0.6 * (q + r),
is used as component (a),
and where at least one polyether of the general formula (I), where
q is 0 to 400,
r is 10 to 500,
with the proviso that q is < 0.45 (q + r),
is used as component (b),
where the polyol mixtures comprise polyesterpolyols and natural-oil-based polyols.

## Revendications

1. Utilisation de polyéthers contenant des groupes uréthane ou urée comme agent de compatibilisation pour des compositions de polyol contenant au moins deux polyols non miscibles l'un avec l'autre, pouvant être obtenus par la transformation de
A. au moins un diisocyanate et/ou polyisocyanate avec
B.
(a) au moins un polyéther hydrophile, qui porte statistiquement au moins une fonction OH et/ou NH₂ et/ou NH et
(b) au moins un polyéther hydrophobe, qui porte statistiquement au moins une fonction OH et/ou NH₂ et/ou NH et
(c) le cas échéant d'autres composés qui portent au moins une fonction OH et/ou NH₂ et/ou NH et/ou d'autres groupes réactifs par rapport à isocyanate, tels que des fonctions acide carboxylique ou époxyde,
dans laquelle on utilise comme composant (a) au moins un polyéther de formule générale (I)
(R¹)ₒ[R²[(E)_{q}-(P)ᵣ-R³]ₚ]ₛ (I)
avec
R¹ représentant, pour o = 1, les proportions s-fonctionnelles non réactives d'un initiateur,
R² représentant, indépendamment les uns des autres, O, NR⁴, NH ou N,
E représentant une fonction éthoxy, de préférence le radical -(CH₂-CH₂-O)-,
P représentant une/des fonction(s) alcoxy identique(s) ou différente(s) comprenant au moins trois atomes de carbone,
R³ représentant des radicaux identiques ou différents du groupe H, -CₜH₂ₜ-N(R⁴)H et/ou -CₜH₂ₜ-NH₂,
R⁴ représentant des fonctions alkyle ou aryle identiques ou différentes comprenant 1 à 20 atomes de carbone, de préférence méthyle, éthyle ou phényle,
o valant 0 ou 1,
p valant 1, 2 ou 3,
q valant 10 à 500,
r valant 0 à 330,
s valant 1 à 10,
t valant 2 à 5,
à condition que
q > 0,6 * (q + r),
et dans laquelle on utilise comme composant (b) au moins un polyéther de formule générale (I), avec
q valant 0 à 400,
r valant 10 à 500,
à condition que
q < 0,45 * (q + r),
dans laquelle les mélanges de polyols contiennent des polyesterpolyols et des polyols à base d'huile naturelle.
